# EUROPEAN PATENT APPLICATION

(11) **EP 2 078 888 A1**
(43) Date of publication of application: **15.07.2009**
(21) Application number: 08075026.8
(22) Date of filing: 10.01.2008
(51) Int. Cl.: F16J 15/44

(54) **A sealing for use in a lubrication system**

(71) Applicant: Gamesa Innovation & Technology, S.L., 31621 Sarriguren, Pamplona (ES); HANSEN TRANSMISSIONS INTERNATIONAL, naamloze vennootschap, 2650 Edegem (BE)
(72) Inventor: Saenz de Ugarte, Patrik, 31013 Pamplona (Navarra) (ES); Baranano Etxebarria, Javier, 31013 Pamplona (Navarra) (ES); Derkinderen, Wim, 2540 Hove (BE)
(74) Representative: Donné, Eddy

(57) **Abstract**

A sealing for a lubrication system whereby lubrication liquid is transported from a static part (5,30) of a gear unit (1,25) to an element (9,28,31) to be lubricated on a rotatable part (4,26,27), the sealing (17,37) comprising two sealing rings (18,38-40), whereby both sealing rings (18,38-40) each make contact with the rotatable part (4,26,27) and the static part (5,30), a chamber (19,41,42) being formed between the sealing rings (18,38-40), the static part and the rotatable part (4,26,27), whereby one or more lubrication supply channels (15,16,33-36) are provided, in the static part (5,30) connecting a source (14) to the chamber (19,41,42), and in the rotatable part (4,26,27) connecting the chamber (19,41,42) to the element to be lubricated (9,28,31).

## Description

The present invention relates to a sealing for use in a lubrication system, whereby lubrication liquid is transported from a static part of a gear unit to an element to be lubricated on a rotatable part of said gear unit.

The present invention is of particular importance in applications of the mentioned type wherein the presently known sealings are not sufficiently performing, such as applications with very big dimensions or applications wherein the element to be lubricated on the rotatable part is difficult to reach.

However, the invention is not limited to these applications.

A typical application wherein a sealing according to the invention could be used, without limiting the invention to this example, is a lubrication system for a gear box of a wind turbine having a planetary stage, whereby lubrication oil needs to be transported from a static housing of the gear box to the planet bearings to be lubricated, the planet bearings being on a rotatable part of the planetary stage, i.e. the planet carrier.

Based on the economies of scale, there is an increasing demand for multi-megawatt wind turbines with very big dimensions.

Rotor blades with a diameter of 140 meter are not an exception.

With growing dimensions, also the tensions in different parts of the wind turbines are increasing due to the weight or due to dynamic loads.

Therefore, it is often necessary to use more ductile construction material, which allows the structure to deform under high loads, preventing the structure from collapsing due to material failure.

However, a problem related to the use of more ductile material is that different parts of the structure, for example a planet carrier connected to the rotor blades of the wind turbine and a static housing undergo bigger and more varying relative displacements, than when a more rigid structure would have been used, which makes it much more difficult to obtain a good sealing between the deforming parts, i.e. between the planet carrier and the housing in the cited example.

A disadvantage of the known sealings is that they are not suitable in applications whereby relatively big and strongly varying deformations occur.

Another disadvantage of some known sealings is that they allow for an important leakage of lubrication liquid through the sealing.

When lubrication liquid with a known temperature or viscosity is provided to an element to be lubricated through a supply channel with known dimensions, the pressure needed in the supply channel to obtain a certain flow of lubrication liquid to the element to be lubricated can be calculated.

When a presently known sealing is used in applications with strongly varying deformations there will be a considerable amount of leakage through the sealing, so that it is difficult to keep control on the pressure in the supply channel, and therefore with these known sealings the delivery of lubrication liquid to the element to be lubricated is not assured.

It is one of the aims of the present invention to provide a sealing that is better withstanding relatively big and strongly varying deformations between the static and rotating part to be sealed off, thereby limiting the leakage of lubrication liquid and allowing for a better control on the pressure needed to supply the lubrication liquid.

It is also an aim of the invention to provide a practical solution, which is easy to implement, does not require very special materials and which is not expensive.

Another typical example in the same context wherein a sealing according to the invention could be used, again without limiting the invention to this example, is the lubrication system of a gear unit of a wind turbine, the gear unit having one or more planetary stages, whereby the input shaft and the output shaft are collinear, as well as all the gears of the planetary stages, except from the planet wheels.

Such collinear configurations are presently very common since they allow for a compact design, while having a good transmission ratio, so that an overall weight reduction is obtained.

The problem however with these configurations is that some parts are very difficult to reach.

For example, if a sun gear of a planetary stage is mounted on a shaft by means of a spline connection, this spline connection is difficult to reach since, it is on an inside part of the gear, while the shaft is rotating.

A disadvantage of the known sealings for these applications is again that there exists a considerable leakage over the sealing, so that the pressure in the supply channels, needed for the delivery of lubrication liquid to the element that is difficult to reach, is not ensured.

The present invention aims at a sealing for use in a lubrication system, for example for a gear unit in a wind turbine, which does not show one or more of the above and other disadvantages.

To this aim, the invention relates to a sealing for use in a lubrication system whereby lubrication liquid is transported from a static part of a gear unit to an element to be lubricated on a rotatable part of said gear unit, the sealing comprising two sealing rings axially displaced from one another with regard to the rotation axis, whereby both sealing rings each make contact with the rotatable part, as well as with the static part, a chamber being formed by the space enclosed between the sealing rings, the static part and the rotatable part, whereby one or more lubrication supply channels or holes are provided, on the one hand, in the static part connecting a lubrication liquid source to the chamber, and, on the other hand, in the rotatable part connecting the chamber to the element to be lubricated.

It is evident that according to the invention more than two sealing rings can be applied in order to form more than one chamber.

An advantage of such a sealing according to the present invention is that just a few sealing rings are needed to form a chamber, which allows for sealing of the rotatable part with regard to the static part, so that the proposed solution is simple and not expensive.

Another advantage of the sealing is that in the chamber formed pressure can be built up in order to have the needed drive to transfer lubrication liquid to the element to be lubricated. Hereby a better control on the supply pressure is obtained.

According to a preferred embodiment of a sealing in accordance with the present invention, one of said static part or said rotatable part of the gear unit is provided with a cylindrical surface on which the inner or outer face of the sealing rings is seated.

Preferably, the other of said static part or said rotatable part is additionally provided with circular grooves axially displaced from one another in which the sealing rings are seated.

An advantage of these embodiments is that the cylindrical surface and/or the circular grooves provide a good contact surface so that no or almost no leaking will occur between the ring and the concerned part of the gear unit.

According to a still more preferred embodiment of a sealing in accordance with the present invention, the mentioned cylindrical surface is additionally somewhat broader than the thickness of the ring it supports.

An advantage of this embodiment is that, during a relative axial displacement of the ring, with regard to the cylindrical surface, the contact is not lost and no or almost no leakage occurs.

According to another preferred embodiment of a sealing according to the invention, the sealing rings are flat disc shaped rings, each ring making contact with a radial directed sidewall of its corresponding groove, whereby preferably the rings have a somewhat smaller outer diameter than the inner diameter of their corresponding groove.

An advantage of this embodiment of a sealing according to the invention is that, during a radial displacement of the groove with respect to the ring, the contact with the sidewall is kept and no or almost no leakage is caused.

Another advantage of this embodiment is that the sealing between the static part and rotatable part gets better, when the pressure in the chamber is augmented.

Indeed, the sealing rings are pushed against the respective parts of the gear unit by the lubrication liquid pressure in the chamber.

With the intention of better showing the characteristics of the invention, hereafter, as an example without any restrictive character whatsoever, some preferred forms of embodiment of a sealing according to the present invention are described, with reference to the accompanying drawings, wherein:
figure 1 represents schematically a cross-section of a gear unit with a planetary gear stage, for example of a wind turbine, wherein a sealing in accordance with the present invention is applied to lubricate the planet bearings on the planet carrier;
figure 2 represents on a bigger scale the sealing indicated by F2 in figure 1; and,
figure 3 schematically represents a cross-section of a gear unit with a spline connection between two shafts and an internal bearing in the shaft, whereby a sealing according to the invention is applied to lubricate the spline connection and the internal bearing.

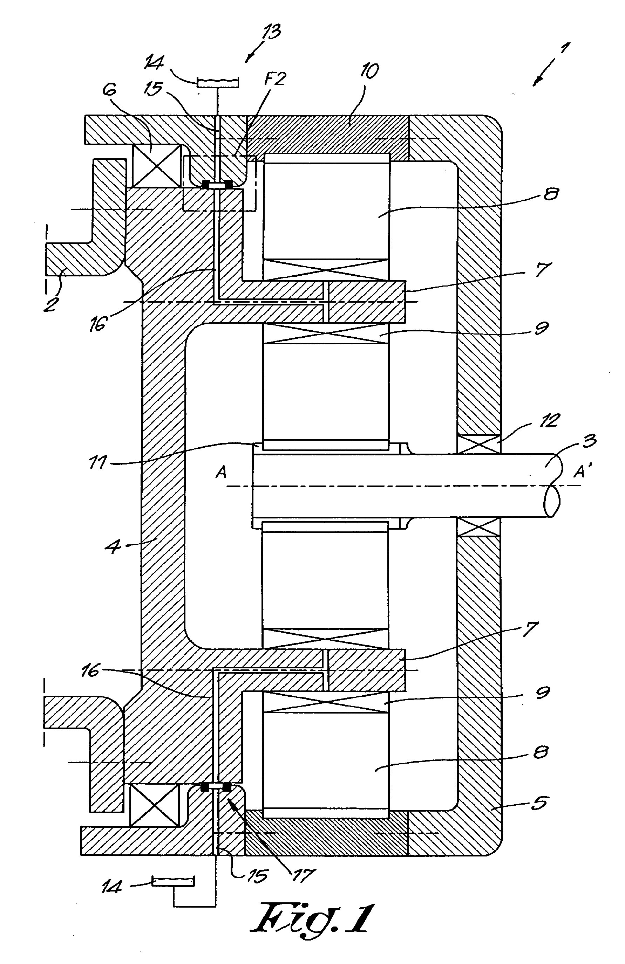

In the gear unit 1 with planetary gear stage represented in figure 1 a relatively slow rotation of an input shaft 2 is transformed into a relatively fast rotation of an output shaft 3.

In a wind turbine for example the input shaft 2 is typically connected to the rotor hub and the rotor blades of the wind turbine, while the output shaft 3 is connected to an electrical generator.

In the case of figure 1 the input shaft 2 is bolted on a planet carrier 4 which is rotatably mounted in a static housing structure 5 by means of a bearing 6 which in this case is a main bearing 6 integrated in the gear box 1.

The planet carrier 4 is provided with multiple planet shafts 7 each supporting rotatably a planet wheel 8 by means of planet bearings 9.

The planet wheels 8 interact with a ring wheel 10, which is bolted to the static housing structure 5, as well as with a sun wheel 11 that is mounted on the output shaft 3 which is rotatably mounted in the housing structure 5 by means of a bearing 12.

In order to lubricate the planet bearings 9, the gear unit 1 is provided with a lubrication system 13.

This lubrication system 13 comprises a lubrication liquid source 14 from which lubrication liquid is provided to the planet bearings 9 through lubrication supply channels 15 in the static housing 5 and lubrication supply channels 16 in the planet carrier 4.

In order to be able to bring lubrication liquid from the static part, i.e. the housing structure 5, to the elements to be lubricated, i.e. the planet bearings 9, which are in turn on a rotating part of the gear unit, i.e. the planet carrier 4, the lubrication is also provided with a sealing 17 between the static and rotating part. This sealing 17 is the subject of the present invention.

Characteristic for the invention is that the sealing 17 comprises two sealing rings 18 axially displaced from one another with regard to the rotation axis AA', whereby both sealing rings 18 each make contact with the rotatable part, i.e. the planet carrier 4, as well as with the static part, i.e. the housing structure 5.

Hereby, a chamber 19 is formed by the space enclosed between the sealing rings 18, the static housing structure 5 and the rotatable planet carrier 4.

The lubrication supply channels 15 in the static part connect the lubrication liquid source 14 to the chamber 19, and, the lubrication supply channels 16 in the planet carrier connect the chamber 19 to the planet bearings 9.

The use of the sealing 17 is self-evident. When lubrication liquid is pumped from the lubrication liquid source 14 through the static lubrication supply channel 15, lubrication liquid enters the chamber 19.

An advantage of the sealing 17 is that when the pressure in the chamber 19 augments, the contact between the rings 18 and the static housing structure 5 and the rotating planet carrier 4 is improved, so that there is no leakage or a very restricted amount of leakage. In this manner the pressure in the chamber 19 and the supply channels 15 and 16 can be kept and is better controllable, which was one of the aims of the present invention.

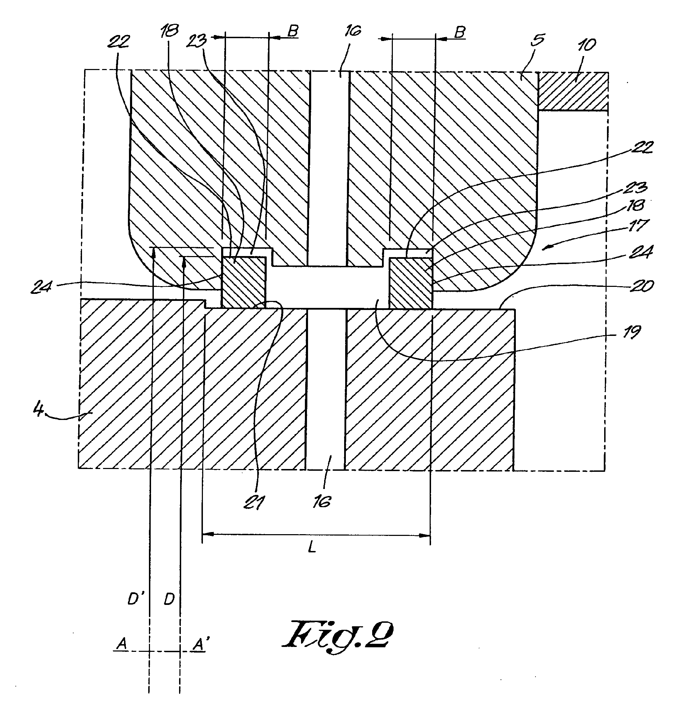

According to a preferred embodiment of a sealing 17 in accordance with the present invention, the rotatable planet carrier 4 is, as in the case of figures 1 and 2, provided with a cylindrical surface 20 on which the inner face 21 of the sealing rings 18 is seated.

However, in another embodiment such a cylindrical surface 20 could also be provided on the static housing 5 whereby in that case, for example, the outer face 22 of the rings 18 is seated on the cylindrical surface 20.

The cylindrical surface 20 provides a good contact surface so that again leakage is restricted.

Furthermore, in the represented example, said cylindrical surface 20 has a length L which is somewhat bigger than the thickness B of the sealing rings 18 it supports or than the overall thickness D of the assembly of rings 18 it supports.

This feature is very interesting for applications where big and strongly varying axial deformations occur, since a relative axial displacement of the rings 18 and the cylindrical surface 20 is possible without loosing contact, so that no or almost no leakage will occur.

In the case of figures 1 and 2, the static housing structure 5 is additionally provided with circular grooves 23 axially displaced from one another in which the sealing rings 18 are seated.

Additionally, according to a preferred embodiment of the invention, the sealing rings 18 are flat disc shaped rings, each ring 18 making contact with a radial directed sidewall 24 of its corresponding groove 24.

For example, a sealing ring 18 according to the invention could have the shape of a piston ring.

As is the case in figures 1 and 2, the rings 18 have, which is preferably according to the invention, a somewhat smaller outer diameter D than the inner diameter D' of their corresponding groove 23, so that, during a radial displacement of the groove 23 with respect to the ring 18, the contact with the sidewall 24 is kept and no or almost no leakage is caused.

In an application where big and strongly varying deformations in a radial direction between a static part and a rotating part of the gear unit 1 can occur, such a sealing 17 can prevent leakage of lubrication liquid, which was one of the aims of the present invention.

Furthermore, the sealing rings 18 are preferably made of a wear resistant material.

A good candidate of such a material for the sealing rings 18 could be a polyamide plastic.

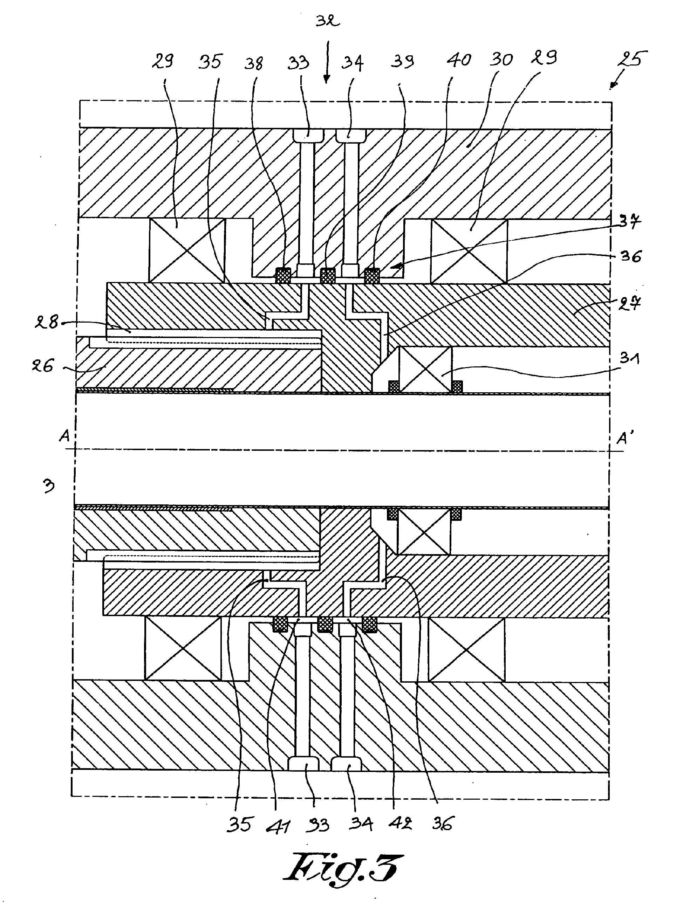

Figure 3 represents another typical application in which a sealing 17 according to the present invention can be applied, i.e. an application whereby the elements to be lubricated on a rotating part of a gear unit 25 are difficult to reach.

In particular in the case of figure 3, two rotatable shafts 26 and 27 are represented which are connected through a spline connection 28.

The shafts are supported by bearings 29 in a static housing 30.

Furthermore, inside the shaft there is an internal bearing 31.

It is clear that the spline connection 28, as well as the internal bearing 31 are difficult to reach, since they are internal parts of the rotatable shafts 26 and 27. However this spline connection 28 and the internal bearing 31 need to be lubricated.

As in the preceding example, the gear unit 25 is therefore equipped with a lubrication system 32, comprising a lubrication liquid source (not shown in figure 3) from which lubrication liquid is provided to the spline connection 28 and the internal bearing 31 respectively through lubrication supply channels 33 and 34 in the static housing 30 and lubrication supply channels 35 and 36 in the rotatable shaft 27.

In order to seal the rotatable shafts 26 and 27 from the static housing 30, the lubrication is again, as in the example of figures 1 and 2, provided with a sealing 37 in accordance with the present invention.

However, in the case of figure 3 the sealing 37 is this time equipped with three sealing rings 38, 39 and 40 instead of two sealing rings 18.

Or, when the sealing 37 of figure 3 is seen from another point of view, it can be considered as being composed of two sealings 17 comparable to the sealing 17 of figures 1 and 2, whereby the sealing ring 39 is common to both sealing rings 17.

Seen from this point of view this embodiment of a sealing 37 in accordance with the invention is less expensive, since less material is needed.

The use of the sealing 37 of figure 3 is further completely analogous to the use of the sealing 17 of figures 1 and 2.

The only difference is that in the case of figure 3, two chambers 41 and 42 are formed: on the one hand chamber 41 between the sealing rings 38 and 39, the static housing structure 30 and the rotatable shaft 27, and on the other hand chamber 42 between the sealing rings 39 and 40, the static housing structure 30 and the rotatable shaft 27.

Hereby, the lubrication supply channels 33 in the static housing 30 connect the lubrication liquid source to the chamber 41, and, the lubrication supply channels 35 in the rotatable shaft 27 connect the chamber 41 to the spline connection 28.

The internal bearing 31 is lubricated through the lubrication supply channels 34 in the static housing 30, through chamber 42 and further into the rotatable shaft 27 through lubrication supply channels 36.

It is clear that the embodiment of figure 3 gives a solution for applications whereby elements on a rotating part of a gear unit have to be lubricated, the elements being very difficult to reach.

Other embodiments of a sealing 17 or 37, whereby even more sealing rings 18 are used or other elements of the gear unit have to be lubricated, are of course not excluded.

The present invention is in no way limited to the embodiments described above and represented in the drawings, but such a sealing 17 or 37 may be realised in different shapes and dimensions, without departure from the scope of the invention.

## Claims

1. A sealing for use in a lubrication system (13,32) whereby lubrication liquid is transported from a static part (5,30) of a gear unit (1,25) to an element to be lubricated (9,28,31) on a rotatable part (4,26,27) of said gear unit (1,25), **characterized in that** the sealing (17,37) comprises two sealing rings (18,38-40) axially displaced from one another with regard to the rotation axis (AA'), whereby both sealing rings (18,38-40) each make contact with the rotatable part (4,26,27) as well as with the static part (5,30), a chamber (19,41,42) being formed by the space enclosed between the sealing rings (18,38-40), the static part and the rotatable part (4,26,27), whereby one or more lubrication supply channels (15,16,33-36) or holes are provided, on the one hand, in the static part (5,30) connecting a lubrication liquid source (14) to the chamber (19,41,42), and, on the other hand, in the rotatable part (4,26,27) connecting the chamber (19,41,42) to the element to be lubricated (9,28,31).

2. A sealing according to claim 1, **characterized in that** one of said static part (5,30) or said rotatable part (4,26,27) is provided with a cylindrical surface (20) on which the inner face (21) or outer face (22) of the sealing rings (18,38-40) is seated.

3. A sealing according to claim 2, **characterized in that** the cylindrical surface (20) has a length (L) somewhat bigger than the thickness (B) of the sealing ring (18,38-40) it supports, so that during a relative axial displacement of the sealing ring (18,38-40) and cylindrical surface (20), the contact is not lost and no or almost no leakage occurs.

4. A sealing according to claim 2 or 3, **characterized in that** the other of said static part (5,30) or said rotatable part (4,26,27) is provided with circular grooves (23) axially displaced from one another in which the sealing rings (18,38-40) are seated.

5. A sealing according to claim 4, **characterized in that** the sealing rings (18,38-40) are flat disc shaped rings, each sealing ring (18,38-40) making contact with a radial directed sidewall (24) of its corresponding groove (23).

6. A sealing according to claim 5, **characterized in that** the sealing rings (18,38-40) have a somewhat smaller outer diameter (D) than the inner diameter (D') of their corresponding groove (23), so that, during a radial displacement of the groove (23) with respect to the sealing ring (18,38-40), the contact with the sidewall (24) is kept and no or almost no leakage is caused.

7. A sealing according to any one of the preceding claims, **characterized in that** the sealing rings (18,38-40) have the shape of piston rings.

8. A sealing according to any one of the preceding claims, **characterized in that** the sealing rings (18,38-40) are made of a wear resistant material.

9. A sealing according to claim 8, **characterized in that** the sealing rings (18,38-40) are made of a polyamide plastic.

10. A sealing according to any one of the preceding claims, **characterized in that** the sealing (17,37) is applied in a gear unit comprising a planetary stage (1).

11. A sealing according to any one of the preceding claims, **characterized in that** the gear unit (1,25) has an input shaft (2,26) and an output shaft (3,27) which are essentially collinear, so that they have the same axis of rotation (AA').

12. A sealing according to claim 10 or 11, **characterized in that** the rotatable part is a planet carrier (4).

13. A sealing according to claim 12, **characterized in that** the element to be lubricated on the rotatable part (4) is a bearing (9) of a planet wheel (8).

14. A sealing according to any one of the preceding claims, **characterized in that** the element (9,28,31) on the rotatable part (4,26,27) to be lubricated is a spline connection (28).

15. A sealing according to any one of the preceding claims, **characterized in that** the gear unit (1,25) is connected to the rotor of a wind turbine.
